# EUROPÄISCHE PATENTSCHRIFT

(11) **EP 1 510 701 B1**
(45) Veröffentlichungstag und Bekanntmachung des Hinweises auf die Patenterteilung: **03.01.2007**
(21) Anmeldenummer: 04018659.5
(22) Anmeldetag: 06.08.2004
(51) Int. Cl.: F16B 5/02, F16B 37/06

(54) **Vorrichtung zum Verbinden von Bauteilen mit Blindnietbefestigung**
Device for joining parts using blind rivet fastening
Dispositif d'assemblage de pièces par fixation avec rivet aveugle

(30) Priorität: 27.08.2003 DE 20313241 U
(43) Veröffentlichungstag der Anmeldung: 02.03.2005
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER - STEINMEISTER & PARTNER GbR

(56) Entgegenhaltungen:
- EP-A- 1 304 489
- DE-A- 19 910 510

## Beschreibung

Die Erfindung betrifft eine Vorrichtung zum Verbinden von Bauteilen, mit einer Blindnietmutter, die mit Hilfe eines Setzgerätes, das einen Gewindebolzen aufweist, in dem einen Bauteil zu verankern ist, einem mit der Blindnietmutter in Gewindeeingriff stehenden Abstandshalter, der im Gebrauch durch eine Ausschraubbewegung des Abstandshalters aus der Blindnietmutter an dem anderen Bauteil zur Abstützung gelangt, einer in die Blindnietmutter einschraubbaren Verbindungsschraube und einem drehmomentübertragenden Zwischenglied in einer Aufnahme des Abstandshalters, das beim Einschrauben der Verbindungsschraube ein Drehmoment auf den Abstandshalter überträgt.

Es sind Vorrichtungen dieser Art bekannt **(EP-A-1 304 489),** die dazu dienen, zwei in einem bestimmten Abstand zueinander angeordnete Bauteile mit Hilfe der Verbindungsschraube zu verbinden, ohne daß die Bauteile beim Anziehen der Verbindungsschraube zusammengezogen werden. Zum Herstellen der Verbindung wird üblicherweise zunächst die Blindnietmutter in das eine Bauteil eingesetzt und durch Zugausübung plastisch verformt, so daß sie in dem Bauteil verankert wird. Zum Verformen der Blindnietmutter wird ein Gewindebolzen eines Setzgerätes in die Blindnietmutter eingeschraubt, und die Blindnietmutter wird am äußeren Ende festgehalten und durch Zurückziehen des Gewindebolzens gestaucht. Danach wird der Abstandshalter in die Blindnietmutter eingesetzt und mit dieser verschraubt. Die Blindnietmutter weist zu diesem Zweck neben dem eigentlichen Gewinde der Mutter ein weiteres Gewinde auf, bei dem es sich um ein Linksgewinde handelt.

Die Verbindungsschraube, deren Außengewinde das gleiche Maß aufweist wie das des Gewindebolzens, wird nun durch das andere Bauteil und den Abstandshalter gesteckt und in die Blindnietmutter eingeschraubt. Durch das Zwischenglied in dem Abstandshalter wird bei der Drehbewegung der Verbindungsschraube der Abstandshalter reibschlüssig mitgenommen. Aufgrund des Linksgewindes zwischen dem Abstandshalter und der Blindnietmutter wird dabei der Abstandshalter aus der Blindnietmutter herausgeschraubt und kommt dem anderen Bauteil entgegen, bis er schließlich an diesem Bauteil zur Abstützung gelangt.

Damit nicht schon beim Einschrauben des Gewindebolzens des Setzgerätes in die Blindnietmutter ein Herausschrauben des Abstandshalters erfolgt, kann der Abstandshalter erst nach dem Vernieten der Blindnietmutter mit dieser verschraubt werden. Die Vorrichtung wird daher in zwei Teilen geliefert, nämlich der zum Einsetzen bereiten Blindnietmutter und dem Abstandshalter, die in den beschriebenen Arbeitsschritten zu montieren sind.

DE-A-199 10 510 beschreibt eine vergleichbare Verbindungsvorrichtung, die jedoch anstelle einer Blindnietmutter einen Stützteil aufweist, der duch Nietverbindung an dem einen Bauteil gehalten ist.

Aufgabe der Erfindung es es, eine Vorrichtung der eingangs genannten Art zu schaffen, die einfacher und rationeller zu montieren ist.

Diese Aufgabe wird erfindungsgemäß dadurch gelöst, daß zum Verankern der Blindnietmutter in dem einen Bauteil der Gewindebolzen in das Zwischenglied und den Abstandshalter einsteckbar und dann in die Blindnietmutter einschraubbar ist, ohne daß der Abstandshalter in seiner Ausschraubrichtung verdreht wird.

Im Anlieferzustand ist der Abstandshalter bereits in die Blindnietmutter eingeschraubt. Der Gewindebolzen des Setzgerätes wird dann in das Zwischenglied und den Abstandshalter eingesteckt oder eingeschraubt, ohne den Abstandshalter mitzudrehen. Durch Zurückziehen des Gewindebolzens kann dann die Blindnietmutter in an sich bekannter Weise mit dem ersten Bauteil vernietet werden. Da der Abstandshalter über ein Linksgewinde mit der Blindnietmutter in Eingriff steht, erfolgt beim Herausschrauben des Gewindebolzens trotz einer etwa vorhandenen reibschlüssigen Verbindung über das Zwischenglied mit dem Gewindebolzen kein Verdrehen des Abstandshalters in seine Ausschraubrichtung. Vielmehr kann der Gewindebolzen in dem Zwischenglied rutschen.

Besonders vorteilhaft ist, daß der Abstandshalter und die Blindnietmutter schon im Anlieferzustand der Vorrichtung miteinander verschraubt sein können. Auf Seiten des Anwenders kann damit der Arbeitsgang des Einsetzens und Einschraubens des Abstandshalters in die Blindnietmutter bei der Montage entfallen. Dies vereinfacht den Ablauf der Montage erheblich und führt zu deutlichen Zeit- und Kostenvorteilen.

Vorteilhafte Ausgestaltungen der Erfindung ergeben sich aus den Unteransprüchen.

In einer ersten Ausführungsform ist vor dem Verankern der Blindnietmutter in dem einen Bauteil der Gewindebolzen mit Spiel in das sich in einer unwirksamen Stellung befindende Zwischenglied und den Abstandshalter einsteckbar, und der Abstandshalter weist Leitkonturen auf, die beim Verankern der Blindnietmutter das Zwischenglied in seine wirksame Stellung überführen.

Dadurch, daß der Gewindebolzen zunächst mit Spiel durch das sich in einer unwirksamen Stellung befindende Zwischenglied hindurchsteckbar ist, läßt sich die Blindnietmutter mit angeschraubtem Abstandshalter in das erste Bauteil einsetzen und in herkömmlicher Weise mit dem Setzgerät anziehen. Bei der dafür nötigen Einschraubbewegung wird das Zwischenglied aufgrund des Spiels nicht mitgedreht, so daß der Abstandshalter nicht aus der Blindnietmutter herausgeschraubt wird. Erst wenn mit einer Zugbewegung die Blindnietmutter angezogen und mit dem Bauteil vernietet wird, drückt die Blindnietmutter gleichzeitig das Zwischenglied entlang der Leitkonturen in seine wirksame Stellung.

Beim Herausschrauben des Gewindebolzens aus der Blindnietmutter wird diese links herum gedreht, so daß bei einem Linksgewinde zwischen Blindnietmutter und Abstandshalter weiterhin kein Herausschrauben des Abstandshalters erfolgt, obwohl das Zwischenglied nun in seiner wirksamen Stellung ist und den Gewindebolzen reibschlüssig mit dem Abstandshalter verbindet.

Die Verbindungsschraube kann nun durch das andere Bauteil in den Abstandshalter eingesteckt und in die Blindnietmutter eingeschraubt werden. Sie steht dabei reibschlüssig über das Zwischenglied mit dem Abstandshalter in Verbindung und wird bei der Schraubbewegung den Abstandshalter mitdrehen und so in an sich bekannter Weise durch die Ausschraubbewegung der Blindnietmutter dafür sorgen, daß der Abstandshalter mit seinem Ende an dem anderen Bauteil zur Abstützung gelangt. Durch das weitere Einschrauben der Verbindungsschraube werden somit die beiden Bauteile in dem vorgegebenen Abstand miteinander verschraubt.

Das Zwischenglied kann insbesondere ein in der Aufnahme des Abstandshalters sitzender Federring sein, der beim Verankern der Blindnietmutter axial in einen die Leitkontur bildenden Konus des Abstandshalters eingedrückt wird. Dabei kann sich der Federring verengen. Bevorzugt ist der Federring durch einen Schlitz unterbrochen. Die Verengung des Federrings wird dann durch eine Verringerung der Breite dieses Schlitzes beim Eindrücken des Federrings in den Konus der Aufnahme ermöglicht.

Vorzugsweise ist das Zwischenglied in seiner wirksamen Stellung gegen axiale Bewegung in dem Abstandshalter verrastet. Durch die Verrastung wird ein definierter Sitz in dem Abstandshalter erreicht. Insbesondere wird dadurch verhindert, daß beim Lösen einer einmal hergestellten Verbindung der zwei Bauteile und anschließendem erneuten Einstecken der Verbindungsschraube das Zwischenglied gelokkert oder aus seiner wirksamen Stellung herausgeschoben wird.

Wahlweise kann das Zwischenglied auch durch einen O-Ring aus gummielastischem Material gebildet werden, der beim Aufschieben auf die Leitkontur radial komprimiert wird und dann beispielsweise in einer an der innenfläche des Abstandshalters umlaufenden Nut einrastet und dadurch axial gesichert wird.

Bevorzugt bildet die Blindnietmutter eine Abstützfläche, die beim Verankern der Blindnietmutter in dem einen Bauteil an einem Ende des Zwischengliedes anstößt und dieses in seine wirksame Stellung schiebt. Dies hat den Vorteil, daß nach dem Vernieten der Blindnietmutter beim anschließenden Einstecken der Verbindungsschraube in den Abstandshalter das Zwischenglied sich auf der Abstützfläche abstützen kann. Ein Herausschieben des Zwischengliedes aus dem Abstandshalter wird damit wirksam verhindert, was durch die oben erwähnte Verrastung zusätzlich unterstützt werden kann.

In einer zweiten Ausführungsform weist der Gewindebolzen einen Gewindeabschnitt und einen Schaft mit kleinerem Durchmesser auf, und die Höhe des Gewindeabschnitts ist so gering, daß dieser vor dem Verankern der Blindnietmutter in dem einen Bauteil durch das Zwischenglied hindurch in eine Position einsteckbar ist, in der er in der Höhe zwischen dem Zwischenglied und dem Gewinde der Blindnietmutter liegt. Dadurch können, wie bei der ersten Ausführungsform, der Abstandshalter und die Blindnietmutter schon im Anlieferzustand der Vorrichtung miteinander verschraubt sein. Das Zwischenglied kann sich von vorneherein in seiner wirksamen Stellung befinden, da beim Hindurchstecken des Gewindebolzens keine Drehbewegung erfolgt. Beim Einschrauben des Gewindebolzens in die Blindnietmutter ist aber der Gewindeabschnitt des Gewindebolzens schon so weit aus dem Zwischenglied ausgetreten, daß dieses nicht mitgedreht wird. Beim Herausschrauben des Gewindebolzens erfolgt, wie bei der ersten Ausführungsform, aufgrund der Drehrichtung weiterhin kein Mitdrehen des Abstandshalters, obwohl der Gewindebolzen nun reibschlüssig mit dem Abstandshalter verbunden sein kann. Bei dem Zwischenglied kann es sich wiederum um einen Federring handeln.

Für beide Ausführungsformen gilt, daß die Vorrichtung bevorzugt eine Anschlagvorrichtung aufweist die die Einschraubbewegung von Blindnietmutter und Abstandshalter begrenzt. Diese Anschlagvorrichtung verhindert so, daß nach dem Vernieten der Blindnietmutter beim Herausschrauben des Gewindebolzens der Abstandshalter zu fest mit der Blindnietmutter verschraubt wird. Anderenfalls könnte ein Festziehen des Abstandshalters später das gewollte, durch Reibschluß bewirkte Herausschrauben verhindern.

Im folgenden werden Ausführungsbeispiele der Erfindung anhand der Zeichnungen näher erläutert.

Es zeigen:
- Fig. 1: einen Längsschnitt durch eine erste Ausführungsform einer Verbindungsvorrichtung, die in ein erstes Bauteil eingesteckt ist;
- Fig. 2: einen Längsschnitt durch einen Abstandshalter der Verbindungsvorrichtung;
- Fig. 3: einen Längsschnitt durch einen Federring der Verbindungsvorrichtung;
- Fig. 4: eine Draufsicht auf den Federring in der in Figur 1 gezeigten Position;
- Fig. 5: die Verbindungsvorrichtung mit einem Setzgerät;
- Fig. 6: die Verbindungsvorrichtung mit vernieteter Blindnietmutter;
- Fig. 7: eine Draufsicht auf den Federring in der in Figur 6 gezeigten Position;
- Fig. 8: das Verbindungselement aus Figur 6 mit eingesteckter Verbindungsschraube, die durch ein mit dem ersten Bauteil zu verbindendes zweites Bauteil hindurchgesteckt ist;
- Fig. 9: die Verbindungsvorrichtung nach Figur 8 im Zustand während des Herstellens der Verbindung;
- Fig. 10: eine zweite Ausführungsform der Verbindungsvorrichtung; und
- Fig. 11: einen Längsschnitt des Abstandshalters der zweiten Ausführungsform.

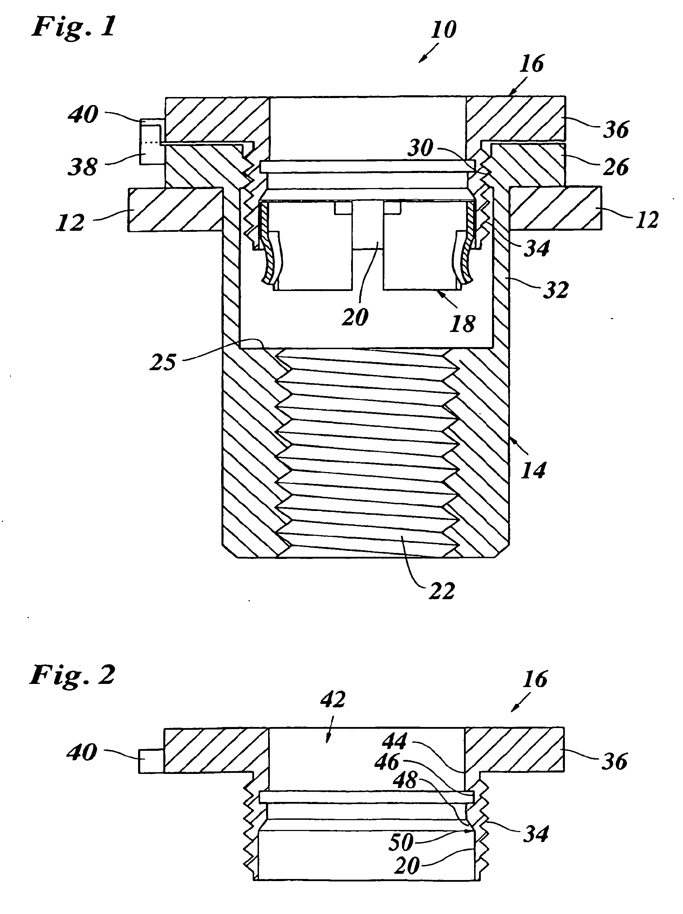

Figur 1 zeigt eine Verbindungsvorrichtung 10 im Anlieferzustand, die in ein erstes Bauteil 12 eingesteckt ist. Die Verbindungsvorrichtung 10 wird gebildet durch eine an dem Bauteil 12 gehaltene Blindnietmutter 14, einen in die Blindnietmutter 14 eingeschraubten Abstandshalter 16 und ein Zwischenglied in Form eines Federrings 18. der in eine Aufnahme 20 an der Unterseite des Abstandshalters 16 eingesteckt ist.

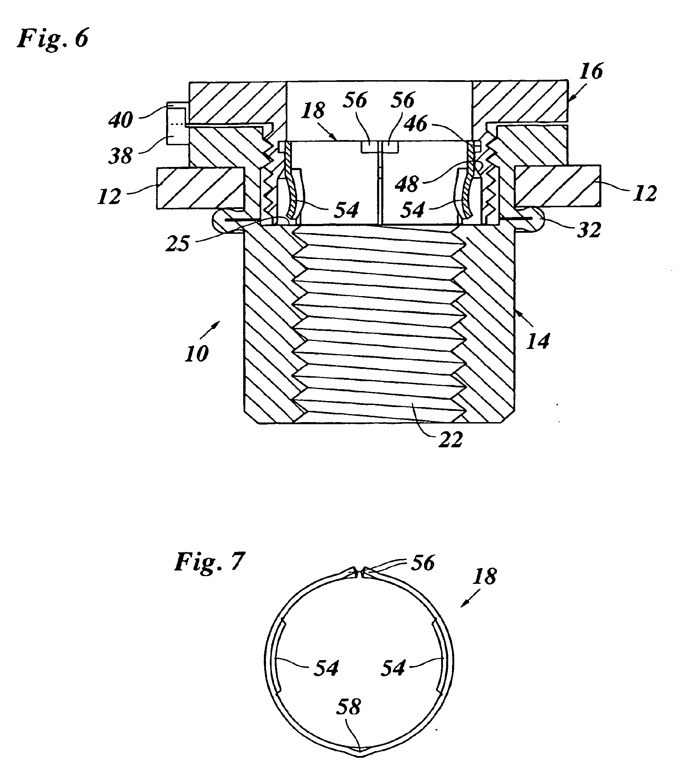

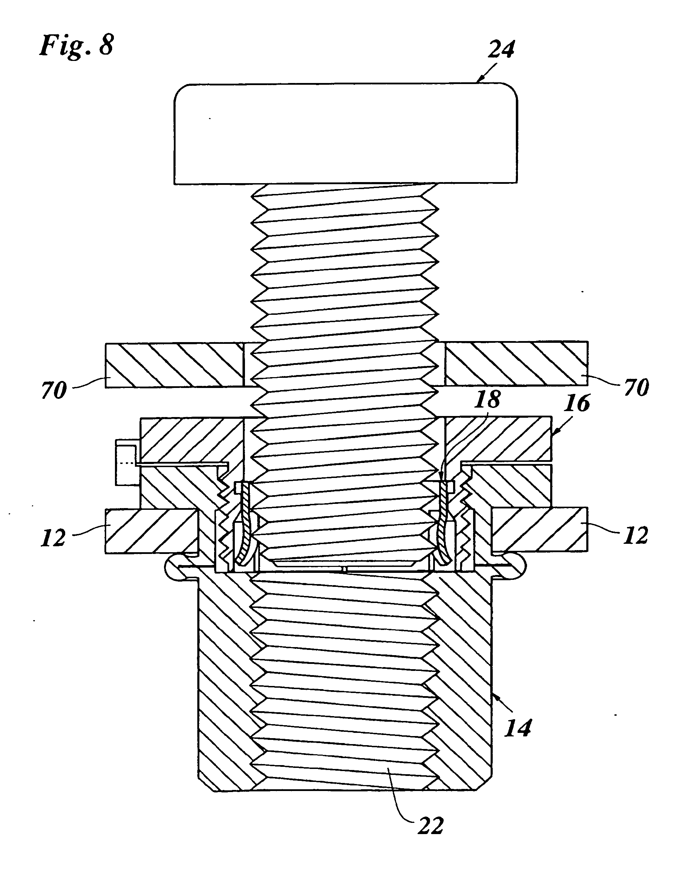

Die Blindnietmutter 14 weist in ihrem unteren Teil ein Rechtsgewinde 22 für eine Verbindungsschraube 24 (Figur 8) auf, das am oberen Ende von einer ringförmigen Abstützfläche 25 für den Federring 18 umgeben ist. Am oberen Ende liegt die Blindnietmutter 14 mit einem Flansch 26 von außen an dem Bauteil 12 an. Im oberen Teil der Blindnietmutter 14 ist ein Linksgewinde 30 ausgebildet. Unterhalb des Linksgewindes 30 und des Flansches 26 bildet eine dünnere Wand 32 einen Verformungsbereich, dessen Funktion weiter unten anhand von Figur 6 erläutert werden wird.

Der Abstandshalter 16. der in Figur 2 deutlicher dargestellt ist, weist ein Außengewinde 34 auf, bei dem es sich um ein Linksgewinde handelt, welches mit dem Linksgewinde 30 der Blindnietmutter 14 in Eingriff steht. Am oberen Ende des Abstandshalters 16 ist ein Flansch 36 vorhanden, der im Anlieferzustand der Verbindungsvorrichtung 10 einen geringen Abstand vom Flansch 26 der Blindnietmutter 14 hat. Am Rand der beiden Flansche 26 und 36 sind Vorsprünge 38 und 40 ausgebildet, die eine Anschlagvorrichtung bilden, die ein weiteres Einschrauben des Abstandshalters 16 in die Blindnietmutter 14 verhindern.

Eine durchgehende Bohrung 42 des Abstandshalters 16 ist in mehrere Abschnitte aufgeteilt. Ein oberer, zylindrischer Abschnitt 44 der Bohrung 42 geht über einen Konus 48 in die Aufnahme 20 über. In dem Abschnitt 44 ist eine Ringnut 46 mit rechteckigem Profil ausgebildet. Im Anlieferzustand der Verbindungsvorrichtung 10 ist der Federring 18 bis zu der mit einem Pfeil 50 gekennzeichneten Stelle, an der der Konus 48 beginnt, in die Aufnahme 20 eingeschoben. Der Konus 48 bildet eine Leitkontur für den Federring 18, deren Funktion weiter unten im Zusammenhang mit Figur 6 erläutert werden wird.

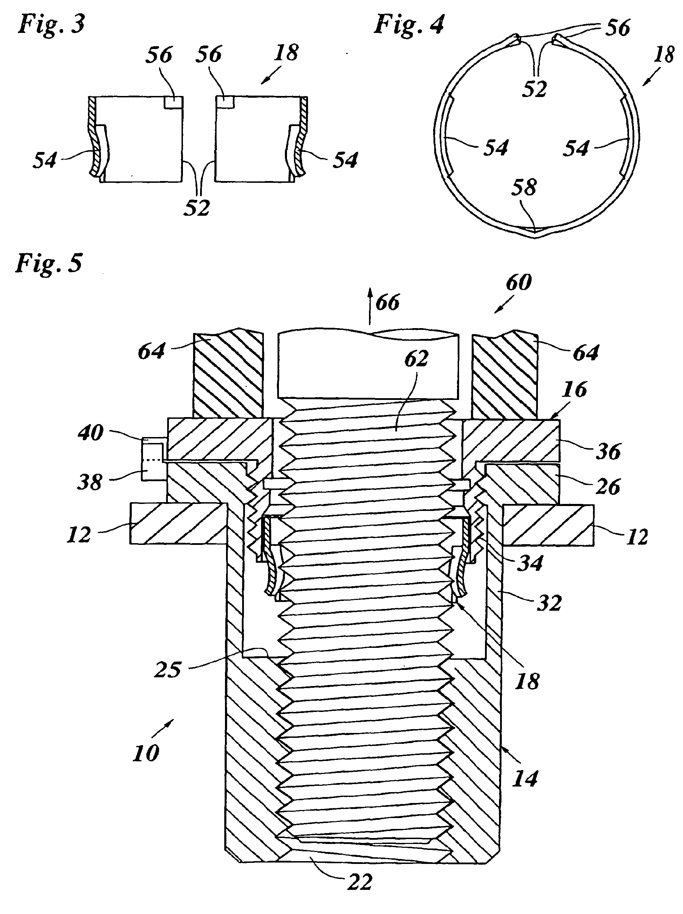

Der Federring 18 ist in Figuren 3 und 4 deutlicher dargestellt. Er ist in einem Stück aus einen dünnen Blech geformt. Der Federring 18 ist durch einen Schlitz 52 unterbrochen, der sich über die volle Höhe des Federrings erstreckt. Zwei sich an den Seiten des Federrings 18 gegenüberliegende Federzungen 54 erstrecken sich etwa über die unteren zwei Drittel der Höhe des Federrings 18 und jeweils um etwa 1/6 des Umfangs. Die Federzungen 54 sind nach innen gewölbt und reichen nicht ganz bis zum unteren Rand des Federrings 18 herunter. Am oberen Rand des Federringes 18 weist dieser links und rechts des Schlitzes 52 zwei nach außen vorstehende Rastzungen 56 auf, denen eine Rastnase 58 diametral gegenüberliegt.

Es sei darauf hingewiesen, daß die Figuren 3 und 4 den Federring 18 in der Figur 1 entsprechenden unwirksamen Stellung in der Aufnahme 20 des Abstandshalters 16 zeigen, in der der Federring 18 gegen die Aufnahme 20 vorgespannt ist. Durch diese Vorspannung ist der Federring 18 gegen Herausfallen gesichert.

Figur 5 veranschaulicht das Befestigen der Verbindungsvorrichtung 10 an dem Bauteil 12 mittels eines Setzgerätes 60. Das Setzgerät 60 weist einen Gewindebolzen 62 und eine Hülse 64 auf. Der Gewindebolzen 62 wird in die Blindnietmutter 14 eingeschraubt. Er kann dabei mit Spiel durch den sich in seiner unwirksamen Stellung befindenden Federring 18 hindurchgesteckt werden und überträgt aufgrund des Spiels beim Einschrauben in die Blindnietmutter 14 kein Drehmoment auf den Federring 18.

Das Setzgerät 60 stützt sich mit der Hülse 64 auf der Oberseite der Verbindungsvorrichtung 10 ab. Zum Verankern der Blindnietmutter 14 wird der Gewindebolzen 62 in Pfeilrichtung 66 zurückgezogen, wobei durch Verformung der dünnen Wand 32 die Blindnietmutter 14 mit dem Bauteil 12 vernietet und somit an diesem verankert wird.

Figur 6 zeigt den Zustand der vernieteten Befestigungsvorrichtung. Wenn die Blindnietmutter 14 durch Zurückziehen des Gewindebolzens gestaucht wird, stößt sie mit der Abstützfläche 25 gegen den unteren Rand des Federrings 18 und schiebt diesen in den Konus 48 des Abstandshalters 16, bis er mit den Rastzungen 56 und der Rastnase 58 in der Ringnut 46 einrastet. Dabei verengt sich der Federring 18. wie in Figur 7 deutlicher zu sehen ist.

In der in den Figuren 6 und 7 gezeigten wirksamen Stellung des Federrings 18 sind die Federzungen 54 durch das Verengen des Federrings soweit aufeinander zu bewegt, daß der Gewindebolzen beim Herausschrauben aus dem Rechtsgewinde 22 reibschlüssig mit dem Federring 18 verbunden ist. Da die Vorsprünge 38 und 40 jedoch ein weiteres Einschrauben des Abstandshalters 16 in die Blindnietmutter 14 verhindern, werden diese nicht gegeneinander verdreht. Damit wird ein zu starkes Festziehen der Schraubverbindung verhindert.

Figur 8 zeigt die Verbindungsvorrichtung aus Figur 7 zusammen mit einem zweiten Bauteil 70, das mit dem ersten Bauteil 12 zu verbinden ist. Die Verbindungsschraube 24 ist durch das zweite Bauteil 70 hindurch in den Abstandshalter 16 eingesteckt und steht über den Federring 18 in reibschlüssiger Verbindung mit dem Abstandshalter 16, da die Federzungen 54 gegen die Verbindungsschraube 24 drücken. Beim Einstecken der Verbindungsschraube 24 ist der Federring 18 sowohl durch die beschriebene Verrastung in der Ringnut 46 als durch die Abstützung auf der Abstützfläche 25 gegen axiales Verschieben gesichert.

Die Verbindungsschraube 24 kann nun in das Rechtsgewinde 22 der Blindnietmutter 14 eingeschraubt werden, wobei sie über die reibschlüssige Verbindung den Abstandshalter 16 rechtsherum mitdreht. Da dieser über die Linksgewinde 30 und 34 mit der Blindnietmutter 14 in Eingriff steht, wird der Abstandshalter 16 herausgeschraubt, bis er mit seiner Oberseite gegen das zweite Bauteil 70 stößt.

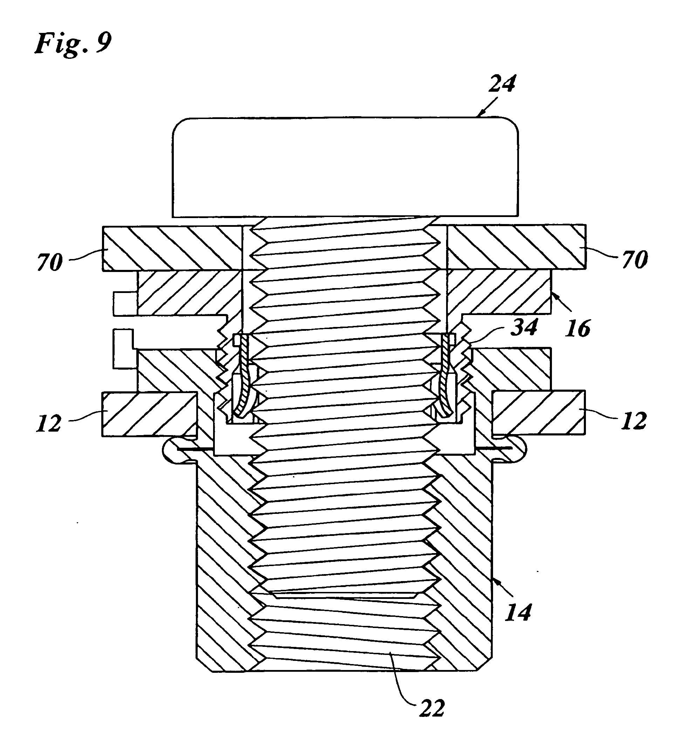

Dies ist in Figur 9 gezeigt. Beim weiteren Einschrauben der Verbindungsschraube 24 kann der Abstandshalter 16 nicht mehr mitgedreht werden, und die Verbindungsschraube 24 rutscht in dem Federring 18. In dem in Figur 9 gezeigten Zustand ist nur noch eine geringfügige weitere Drehung der Verbindungsschraube 24 notwendig, um diese anzuziehen und die beiden Bauteile 12 und 70 in ihrem vorgegebenen Abstand fest miteinander zu verspannen.

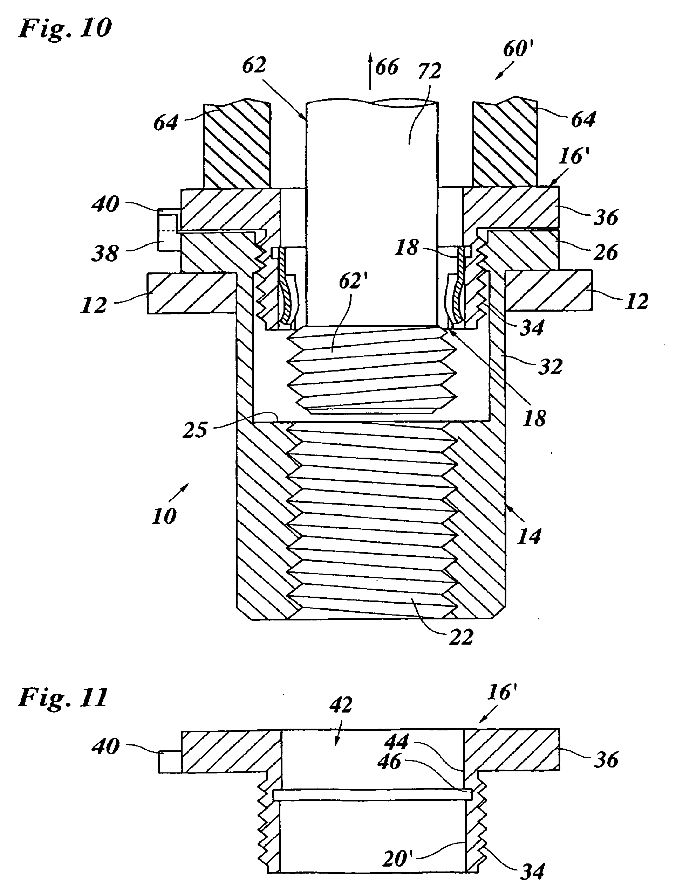

Figur 10 zeigt eine zweite Ausführungsform, die sich von der ersten Ausführungsform dadurch unterscheidet, daß der Federring 18 schon im Anlieferzustand der Verbindungsvorrichtung 10 in seiner wirksamen Stellung in einem Abstandshalter 16' ist. Deshalb sind keine Leitkonturen erforderlich, und der Konus 48 der Aufnahme 20 kann entfallen. Die Aufnahme 20' des in Figur 11 deutlicher zu erkennenden Abstandshalters 16' weist unterhalb der Ringnut 46 überall einen Innendurchmesser auf, der dem kleinsten Durchmesser des Konus 48 nach Figur 2 entspricht. Der Federring 18 ist identisch mit der ersten Ausführungsform, und seine Konfiguration entspricht der in Figur 7 gezeigten.

In Figur 10 ist zum Befestigen der Verbindungsvorrichtung 10 an dem ersten Bauteil 12 ein speziell angepaßtes Setzgerät 60' mit einem Gewindeabschnitt 62' seines Gewindebolzens 62 durch den Federring 18 hindurchgesteckt. Oberhalb des Gewindeabschnitts 62' weist das Setzgerät 60' einen Schaft 72 auf, dessen Außendurchmesser geringer ist als der lichte Durchmesser des Federrings 18. Die Höhe des Gewindeabschnitts 62' ist an die freie Höhe zwischen dem Federring 18 und dem oberen Ende des Rechtsgewindes 22 angepaßt und so gering, daß der Gewindebolzen 62 den Federring 18 lediglich während des Hindurchsteckens berührt. Beim nachfolgenden Einschrauben des Gewindebolzens 62 in die Blindnietmutter 14 wird daher kein Drehmoment auf den Federring 18 übertragen, so daß der Abstandshalter 16 nicht bewegt wird.

Beim Zurückziehen der Blindnietmutter 14 wird nun, wie bei der ersten Ausführungsform, durch Verformung der dünnen Wand 32 die Blindnietmutter an dem Bauteil 12 verankert. Es erfolgt allerdings kein Einschieben des Federrings 18, da dieser sich ja bereits in seiner wirksamen Stellung befindet. Der weitere Ablauf der Montage, beginnend mit dem Herausschrauben des Gewindebolzens 62, erfolgt dann wie bei der ersten Ausführungsform.

## Patentansprüche

1. Vorrichtung zum Verbinden von Bauteilen (12, 70), mit einer Blindnietmutter (14), die mit Hilfe eines Setzgerätes (60), das einen Gewindebolzen (62) aufweist, in dem einen Bauteil (12) zu verankern ist, einem mit der Blindnietmutter (14) in Gewindeeingriff stehenden Abstandshalter (16), der im Gebrauch durch eine Ausschraubbewegung des Abstandshalters aus der Blindnietmutter (14) an dem anderen Bauteil (70) zur Abstützung gelangt, einer in die Blindnietmutter (14) einschraubbaren Verbindungsschraube (24) und einem drehmomentübertragenden Zwischenglied (18) in einer Aufnahme (20) des Abstandshalters (16), das beim Einschrauben der Verbindungsschraube (24) ein Drehmoment auf den Abstandshalter (16) überträgt, **dadurch gekennzeichnet, daß** zum Verankern der Blindnietmutter (14) in dem einen Bauteil (12) der Gewindebolzen (62) in das Zwischenglied (18) und den Abstandshalter (16) einsteckbar und dann in die Blindnietmutter (14) einschraubbar ist, ohne daß der Abstandshalter (16) in seiner Ausschraubrichtung verdreht wird.

2. Vorrichtung nach Anspruch 1, **dadurch gekennzeichnet, daß** vor dem Verankern der Blindnietmutter (14) in dem einen Bauteil (12) der Gewindebolzen (62) mit Spiel in das sich in einer unwirksamen Stellung befindende Zwischenglied (18) und den Abstandshalter (16) einsteckbar ist und daß der Abstandshalter (16) Leitkonturen (20, 48) aufweist, die beim Verankern der Blindnietmutter (14) das Zwischenglied (18) in seine wirksame Stellung überführen.

3. Vorrichtung nach Anspruch 2, **dadurch gekennzeichnet, daß** das Zwischenglied (18) ein in der Aufnahme (20) des Abstandshalters sitzender Federring (18) ist, der beim Verankern der Blindnietmutter (14) axial in einen die Leitkontur bildenden Konus (48) des Abstandshalters (16) eingedrückt wird.

4. Vorrichtung nach Anspruch 3, **dadurch gekennzeichnet, daß** der Federring (18) durch einen Schlitz (52) unterbrochen ist.

5. Vorrichtung nach einem der Ansprüche 2 bis 4, **dadurch gekennzeichnet, daß** das Zwischenglied (18) in seiner wirksamen Stellung gegen axiale Bewegung in dem Abstandshalter (16) verrastet ist.

6. Vorrichtung nach einem der Ansprüche 2 bis 5. **dadurch gekennzeichnet, daß** die Blindnietmutter (14) eine Abstützfläche (25) bildet, die beim Verankern der Blindnietmutter (14) in dem einen Bauteil (12) an einem Ende des Zwischengliedes (18) anstößt und dieses in seine wirksame Stellung schiebt.

7. Vorrichtung nach Anspruch 1, in Kombination mit einem Setzgerät (60) mit einem Gewindebolzen (62) zum Verankern der Blindnietmutter (14) in dem einen Bauteil (12), **dadurch gekennzeichnet, daß** der Gewindebolzen (62) einen Gewindeabschnitt (62') und einen Schaft (72) mit kleinerem Durchmesser aufweist und daß die Höhe des Gewindeabschnitts (62') so gering ist, daß dieser vor dem Verankern der Blindnietmutter (14) in dem einen Bauteil (12) durch das Zwischenglied (18) hindurch in eine Position einsteckbar ist, in der er in der Höhe zwischen dem Zwischenglied (18) und dem Gewinde (22) der Blindnietmutter (14) liegt.

8. Vorrichtung nach einem der vorstehenden Ansprüche, **dadurch gekennzeichnet, daß** es sich bei dem Zwischenglied (18) um einen Federring (18) handelt.

9. Vorrichtung nach einem der vorstehenden Ansprüche, **gekennzeichnet durch** eine Anschlagvorrichtung (38, 40), die die Einschraubbewegung von Blindnietmutter (14) und Abstandshalter (16) begrenzt.

## Claims

1. Device for joining components (12, 70), with a blind rivet nut (14), which is to be anchored in one component (12) by means of a setting mechanism (60) comprising a threaded bolt (62), a spacer (16), which is in threaded engagement with the blind rivet nut (14) and which, when in use, is supported at the other component (70) through an unscrewing movement of the spacer out of the blind rivet nut (14), a clamping bolt (24), which can be screwed into the blind rivet nut (14), and a torque-transmitting intermediate member (18) in a receptacle (20) of the spacer (16), which transmits a torque to the spacer (16) when the clamping bolt (24) is screwed in, **characterised in that**, in order to anchor the blind rivet nut (14) in one component (12), the threaded bolt (62) can be inserted in the intermediate member (18) and the spacer (16) and then screwed into the blind rivet nut (14) without the spacer (16) being turned in its unscrewing direction.

2. Device according to Claim 1, **characterised in that**, before the blind rivet nut (14) is anchored in one component (12), the threaded bolt (62) can be inserted with play in the intermediate member (18), which is located in an inactive position, and the spacer (16), and that the spacer (16) has guide contours (20, 48) which transfer the intermediate member (18) into its active position when the blind rivet nut (14) is anchored.

3. Device according to Claim 2, **characterised in that** the intermediate member (18) is a spring lock washer (18) which is seated in the receptacle (20) of the spacer and is pushed axially into a cone (48), forming the guide contour, of the spacer (16) when the blind rivet nut (14) is anchored.

4. Device according to Claim 3, **characterised in that** the spring lock washer (18) is interrupted by a gap (52).

5. Device according to any one of Claims 2 to 4, **characterised in that** the intermediate member (18) is locked in its active position against axial movement in the spacer (16).

6. Device according to any one of Claims 2 to 5, **characterised in that** the blind rivet nut (14) forms a support face (25) which, when the blind rivet nut (14) is anchored in one component (12), strikes against one end of the intermediate member (18) and pushes this into its active position.

7. Device according to Claim 1, combined with a setting mechanism (60) with a threaded bolt (62) for anchoring the blind rivet nut (14) in one component (12), **characterised in that** the threaded bolt (62) comprises a threaded portion (62') and a shank (72) with a smaller diameter, and that the height of the threaded portion (62') is so small that, before the blind rivet nut (14) is anchored in one component (12), this portion can be inserted through the intermediate member (18) into a position in which it lies in the height between the intermediate member (18) and the thread (22) of the blind rivet nut (14).

8. Device according to any of the preceding Claims, **characterised in that** the intermediate member (18) is a spring lock washer (18).

9. Device according to any of the preceding Claims, **characterised by** a stop device (38, 40) which limits the screwing-in movement of the blind rivet nut (14) and the spacer (16).

## Revendications

1. Dispositif pour relier des éléments de construction (12, 70), avec un écrou pour rivet borgne (14) qui doit être ancré dans le premier élément de construction (12) à l'aide d'un outil de pose (60) comportant un boulon fileté (62), avec un écarteur (16) en prise filetée avec l'écrou pour rivet borgne (14), lequel parvient en appui pendant l'utilisation, par un mouvement de dévissage de l'écarteur à l'extérieur de l'écrou pour rivet borgne (14), contre l'autre élément de construction (70), avec une vis de liaison (24) pouvant être vissée dans l'écrou pour rivet borgne (14) et avec un organe intermédiaire (18) transmettant le couple de rotation dans un logement (20) de l'écarteur (16), lequel transmet un couple de rotation à l'écarteur (16) pendant le vissage de la vis de liaison (24), **caractérisé en ce que** pour ancrer l'écrou à rivet borgne (14) dans le premier élément de construction (12) on peut enfoncer le boulon fileté (62) dans l'organe intermédiaire (18) et l'écarteur (16), puis le visser dans l'écrou pour rivet borgne (14) sans que l'écarteur (16) ne soit tourné dans son sens de dévissage.

2. Dispositif selon la revendication 1, **caractérisé en ce qu'**avant l'ancrage de l'écrou pour rivet borgne (14) dans le premier élément de construction (12), le boulon fileté (62) peut être enfoncé avec jeu dans l'organe intermédiaire (18) se trouvant dans une position inactive et dans l'écarteur (18), et **en ce que** l'écarteur (18) présente des contours de guidage (20, 48) qui, lors de l'ancrage de l'écrou pour rivet borgne (14), font passer l'organe intermédiaire (18) dans sa position active.

3. Dispositif selon la revendication 2, **caractérisé en ce que** l'organe intermédiaire (18) est une rondelle-ressort (18) située dans le logement (20) de l'écarteur, qui, lors de l'ancrage de l'écrou pour rivet borgne (14), est pressée axialement dans un cône (48), formant le contour de guidage, de l'écarteur (16).

4. Dispositif selon la revendication 3, **caractérisé en ce que** la rondelle-ressort (18) est interrompue par une fente (52).

5. Dispositif selon l'une des revendications 2 à 4, **caractérisé en ce que** l'organe intermédiaire (18), dans sa position active, est accroché dans l'écarteur (16), contre un mouvement axial.

6. Dispositif selon l'une des revendications 2 à 5, **caractérisé en ce que** l'écrou pour rivet borgne (14) forme une surface d'appui (25) qui, lors de l'ancrage de l'écrou pour rivet borgne (14) dans le premier élément de construction (12), vient heurter une extrémité de l'organe intermédiaire (18) et pousse celui-ci dans sa position active.

7. Dispositif selon la revendication 1, en combinaison avec un outil de pose (60) comportant un boulon fileté (62) pour l'ancrage de l'écrou pour rivet borgne (14) dans le premier élément de construction (12), **caractérisé en ce que** le boulon fileté (62) comporte un segment fileté (62') et une tige (72) de plus petit diamètre, et **en ce que** la hauteur du segment fileté (62') est si petite que celui-ci peut être enfoncé, avant l'ancrage de l'écrou pour rivet borgne (14) dans le premier élément de construction (12), à travers l'organe intermédiaire (18), dans une position dans laquelle il se situe à une hauteur entre l'organe intermédiaire (18) et le filetage (22) de l'écrou pour rivet borgne (14).

8. Dispositif selon l'une des revendications précédentes, **caractérisé en ce que** l'organe intermédiaire (18) est une rondelle-ressort (18).

9. Dispositif selon l'une des revendications précédentes, **caractérisé par** un dispositif de butée (38, 40) qui limite le mouvement de vissage de l'écrou pour rivet borgne (14) et de l'écarteur (16).
